# EUROPÄISCHE PATENTSCHRIFT

(11) **EP 2 428 381 B1**
(45) Veröffentlichungstag und Bekanntmachung des Hinweises auf die Patenterteilung: **13.03.2019**
(21) Anmeldenummer: 11007217.0
(22) Anmeldetag: 06.09.2011
(51) Int. Cl.: B60J 7/185, E05B 81/20, E05B 83/00

(54) **Verschlusseinrichtung**
Locking device
Dispositif de verrouillage

(30) Priorität: 08.09.2010 DE 102010044700
(43) Veröffentlichungstag der Anmeldung: 14.03.2012
(73) Patentinhaber: Magna Car Top Systems GmbH, 74321 Bietigheim-Bissingen (DE)
(72) Erfinder: Blech, Christof, 71272 Renningen (DE); Wilke, Gunnar, 49434 Neuenkirchen-Vörden (DE)
(74) Vertreter: Völger, Silke Beatrix

(56) Entgegenhaltungen:
- EP-A2- 1 072 456
- DE-A1-102008 008 747
- US-A1- 2004 021 339
- US-B1- 6 315 336

## Beschreibung

Die vorliegende Erfindung betrifft eine Verschlusseinrichtung für ein Verdeck eines Fahrzeugs, mit den Merkmalen des Oberbegriffs des Anspruchs 1. Außerdem betrifft die Erfindung ein mit einem Verdeck und wenigstens einer solchen Verschlusseinrichtung ausgestattetes Fahrzeug.

Aus der DE 103 00 882 A1 ist eine Verschlusseinrichtung für ein Verdeck bekannt, die einen Verschlusshaken aufweist, der vorne ein Greifende und hinten ein Lagerende aufweist. In einem Gehäuse der Verschlusseinrichtung ist das Lagerende des Verschlusshakens in einer Längsrichtung des Verschlusshakens horizontal verstellbar gelagert. Ferner umfasst die Verschlusseinrichtung eine Antriebseinrichtung zum Verstellen des Verschlusshakens, die bei der bekannten Verschlusseinrichtung zwei parallel wirkende, beiderseits des Verschlusshakens angeordnete Vierlenkergetriebe umfasst. Bei der bekannten Verschlusseinrichtung erstrecken sich sämtliche Schwenkachsen der beteiligten Lenker horizontal, wodurch die Verschlusseinrichtung in der Vertikalrichtung vergleichsweise viel Bauraum benötigt, um die Kinematik der Lenker zu ermöglichen.

Die bekannte Verschlusseinrichtung ist außerdem mit einer Sensorik zum Erkennen einer Schließstellung und einer Offenstellung des Verschlusshakens ausgestattet. Hierzu ist an Lenkern des einen Vierlenkergetriebes jeweils ein horizontal vorstehender Absatz ausgeformt, der mit einem am Gehäuse fest angeordneten Mikroschalter zusammenwirkt.

Weitere Verschlusseinrichtungen, bei denen ein Verschlusshaken ein in der Längsrichtung verstellbares hinteres Lagerende aufweist, sind beispielsweise aus der DE 102 05 144 B4, aus der EP 0 488 494 A1 und aus der DE 103 52 488 B3 bekannt.

Andere Verschlusseinrichtungen, bei denen der Verschlusshaken an seinem hinteren Lagerende um eine horizontale Schwenkachse schwenkverstellbar am Gehäuse gelagert ist, sind beispielsweise aus der DE 199 64 066 A1, aus der EP 0 309 065 A2, aus der DE 41 11 646 A1, aus der EP 0 879 723 B1, aus der DE 199 44 615 A1 und aus der DE 101 05 771 A1 bekannt.

Weitere Verschlusseinrichtungen mit einer Positionserkennungssensorik sind aus der EP 1 640 200 B1 und aus der DE 199 09 489 B4 bekannt. Aus anderen Bereichen der Technik sind ebenfalls Positionserkennungssensoren bekannt, wie zum Beispiel aus der DE 197 02 833 A1, aus der DE 44 19 179 A1, aus der DE 198 54 181 A1, aus der DE 196 03 964 A1 und aus der DE 196 01 948 A1.

Aus der US 2004/0021339 A1 ist eine Verschlusseinrichtung für ein Verdeck bekannt, die einen Verschlusshaken aufweist, der vorne ein Greifende und hinten ein Lagerende aufweist. In einem Gehäuse der Verschlusseinrichtung ist das Lagerende des Verschlusshakens in einer Längsrichtung des Verschlusshakens horizontal verstellbar gelagert. Ferner umfasst die Verschlusseinrichtung eine Antriebseinrichtung zum Verstellen des Verschlusshakens, wobei die Antriebseinrichtung einen schwenkbar am Gehäuse gelagerten vorderen Lenker und einen hinteren Lenker umfasst. Der hintere Lenker ist über einen Gleitstein in einem Schlitz des Gehäuses gelagert und ist des Weiteren mit dem hinteren Lagerende des Verschlusshakens gekoppelt. Bei der bekannten Verschlusseinrichtung erstrecken sich sämtliche Schwenkachsen der beteiligten Lenker horizontal, wodurch die Verschlusseinrichtung in der Vertikalrichtung vergleichsweise viel Bauraum benötigt, um die Kinematik der Lenker zu ermöglichen.

Die Erfindung beschäftigt sich mit dem Problem, für eine derartige Verschlusseinrichtung eine verbesserte Ausführungsform anzugeben, die sich durch eine hohe Zuverlässigkeit sowie durch eine kompakte Bauform auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Antriebseinrichtung mit wenigstens einem Zweilenkergetriebe auszustatten, wobei die Antriebseinrichtung außerdem einen mit dem Zweilenkergetriebe antriebsverbundenen Antriebslenker und einen Stellantrieb zum Antreiben des Antriebslenkers umfasst. Das Zweilenkergetriebe weist einen vorderen Lenker und einen hinteren Lenker auf. Der vordere Lenker ist dabei vorne um eine vordere vertikale Schwenkachse am Gehäuse verschwenkbar gelagert, während der hintere Lenker hinten über eine Kopplungseinrichtung mit dem Lagerende des Verschlusshakens antriebsverbunden ist sowie um eine hintere vertikale Schwenkachse an der Kopplungseinrichtung verschwenkbar gelagert ist. Ferner sind die beiden Lenker des Zweilenkergetriebes zwischen ihren Schwenkachsen um eine weitere oder mittlere vertikale Schwenkachse aneinander verschwenkbar gelagert, wobei der Antriebslenker an einem der Lenker zwischen dessen Schwenkachsen um eine weitere vertikale Schwenkachse verschwenkbar gelagert ist. Insgesamt sind die Lenker der Antriebseinrichtung, also der Antriebslenker und die beiden Lenker des Zweilenkergetriebes jeweils um vertikale Achsen verschwenkbar gelagert, wodurch die Verschlusseinrichtung in der Vertikalrichtung sehr kompakt bzw. flach realisiert werden kann. Darüber hinaus arbeiten die beiden Lenker des Zweilenkergetriebes wie ein Kniegelenk, das in der gestreckten Position die Übertragung sehr hoher Kräfte ermöglicht, beispielsweise um den Verschlusshaken in der nach hinten bewegten Schließstellung zu sichern. Hierdurch ergibt sich eine besonders hohe Betriebszuverlässigkeit für die Verschlusseinrichtung.

Entsprechend einer vorteilhaften Ausführungsform kann der Stellantrieb einen Kurbeltrieb zum Antreiben des Antriebslenkers aufweisen, dessen Kurbel um eine zur Kurbel exzentrische vertikale Drehachse drehverstellbar ist, wobei der Antriebslenker distal zum Zweilenkergetriebe an der Kurbel um eine zur Kurbel koaxiale vertikale Schwenkachse verschwenkbar gelagert ist. Durch diesen vertikal drehenden Kurbeltrieb wird ebenfalls wenig Bauraum in der Vertikalrichtung benötigt, was die flache Bauweise der Verschlusseinrichtung unterstützt. Ferner kann mit Hilfe eines derartigen Kurbeltriebs eine vergleichsweise große Kraftübertragung auf den Antriebslenker und somit auf das Zweilenkergetriebe realisiert werden, was die Betriebszuverlässigkeit der Verschlusseinrichtung unterstützt.

Entsprechend einer anderen vorteilhaften Ausführungsform kann der Stellantrieb einen Motor und ein damit antriebsgekoppeltes Getriebe aufweisen, wobei ein Abtrieb des Getriebes den Kurbeltrieb antreibt oder bildet. Besonders vorteilhaft Ist dabei eine Weiterbildung, bei welcher das Getriebe als Planetengetriebe ausgestaltet ist, dessen Sonnenrad mit dem Motor antriebsverbunden ist und dessen Planetenradträger oder dessen Hohlrad den Abtrieb bildet, der den Kurbeltrieb antreibt oder bildet. Insbesondere kann außerdem die Antriebsverbindung zwischen einer Abtriebswelle des Motors und dem Sonnenrad des Planetengetriebes über ein Schneckengetriebe erfolgen, so dass die Rotorachse des Motors quer zu den Drehachsen des Planetengetriebes verlaufen kann.

Gemäß einer anderen vorteilhaften Ausführungsform können die Lenker des Zweilenkergetriebes in einer Schließstellung des Verschlusshakens eine Übertotpunktstellung einnehmen. Das Kniegelenk ist in dieser Übertotpunktstellung überdrückt, so dass Zugkräfte am Verschlusshaken nunmehr Zugkräfte auf den Antriebslenker übertragen, während zum Verstellen des Verschlusshakens in die Offenstellung Druckkräfte von den Lenkern des Zweilenkergetriebes auf den Antriebslenker übertragen werden müssten. Insofern ergibt sich durch die Übertotpunktsteilung eine Selbstsperrung des Zweilenkergetriebes in der Schließstellung des Verschlusshakens.

Bei einer anderen vorteilhaften Ausführungsform kann die Antriebseinrichtung ein zweites Zweilenkergetriebe aufweisen, das beabstandet zum anderen oder ersten Zweilenkergetriebe am oder im Gehäuse angeordnet ist. Zweckmäßig fallen bei beiden Zweilenkergetrieben die jeweiligen vorderen vertikalen Schwenkachsen und die jeweiligen hinteren vertikalen Schwenkachsen und die jeweiligen mittleren vertikalen Schwenkachsen jeweils zusammen, so dass sich identische Kinematiken ergeben. Die vorderen Lenker der beiden Zweilenkergetriebe können dann zweckmäßig koaxial zur vorderen Schwenkachse und drehfest miteinander verbunden sein. Zusätzlich oder alternativ können die hinteren Lenker der beiden Zweilenkergetriebe koaxial zur hinteren Schwenkachse drehfest miteinander verbunden sein. Durch die beiden parallel wirkenden und die Kopplungseinrichtung parallel antreibenden Zweilenkergetriebe kann die Zuverlässigkeit der Verschlusseinrichtung deutlich verbessert werden, da quasi ein von Kippmomenten freier horizontaler Antrieb der Kopplungseinrichtung realisierbar ist.

Entsprechend einer besonderen Weiterbildung können die vorderen Lenker der beiden Zweilenkergetriebe jeweils drehfest an einer gemeinsamen vorderen Welle angeordnet sein, die um die vordere Schwenkachse am Gehäuse verschwenkbar gelagert ist. Zusätzlich oder alternativ können die hinteren Lenker der beiden Zweilenkergetriebe jeweils drehfest an einer gemeinsamen hinteren Welle angeordnet sein, die um die hintere Schwenkachse an der Kopplungseinrichtung verschwenkbar gelagert ist. Die Verwendung einer gemeinsamen Welle erleichtert die drehfeste Kopplung zwischen den beiden Lenkern.

Entsprechend einer anderen Weiterbildung kann das Gehäuse zwei vertikal voneinander beabstandete Platten aufweisen, zwischen denen das Lagerende des Verschlusshakens horizontal verstellbar angeordnet ist. Die beiden Zweilenkergetriebe können dann an zwei voneinander abgewandten Außenseiten der beiden Platten angeordnet sein. Hierdurch ergibt sich eine besonders stabile Abstützung der Zweilenkergetriebe am Gehäuse einerseits und der Kopplungseinrichtung am Gehäuse andererseits.

Eine andere vorteilhafte Ausführungsform zeichnet sich durch eine Sensorik zum Erkennen einer Schließstellung und einer Offenstellung des Verschlusshakens aus, wobei insbesondere vorgesehen sein kann, dass die Antriebseinrichtung einen Antriebslenker und einen Kurbeltrieb zum Antreiben des Antriebslenkers aufweist, wobei der Kurbeltrieb eine um eine vertikale Drehachse drehverstellbare und zur Drehachse exzentrisch angeordnete Kurbel aufweist, die mit dem Antriebslenker antriebsverbunden ist. Die zuvor genannte Sensorik kann nun im Bereich dieses Kurbeltriebs angeordnet sein, um damit zum Erkennen der Schließstellung und der Offenstellung des Beschlusshakens zusammenzuwirken.

Entsprechend einer vorteilhaften Ausführungsform kann der Kurbeltrieb eine um die Drehachse drehverstellbare Scheibe aufweisen, an der die Kurbel angeordnet ist. Die Sensorik umfasst nun eine an der Scheibe drehfest angeordnete Schaltkulisse sowie zumindest zwei Schalter, die in der Umfangsrichtung der Scheibe voneinander beabstandet ortsfest am Gehäuse angeordnet sind. Die Schaltkulisse und die Schalter sind dabei so aufeinander abgestimmt, dass die Schaltkulisse in der Schließstellung des Verschlusshakens den einen Schalter und in der Offenstellung des Verschlusshakens den anderen Schalter betätigt. Die vorgeschlagene Bauweise zeichnet sich durch eine geometrisch einfache Struktur aus, die außerdem eine vergleichsweise hohe Zuverlässigkeit gewährleistet,

Zweckmäßig kann die Schaltkulisse axial an der Scheibe angeordnet sein. In der Folge kann die Schaltkulisse axial an die Scheibe angebaut werden, während die Scheibe beispielsweise einen integralen Bestandteil des Kurbeltriebs bildet, also separat von der Schaltkulisse hergestellt werden kann. Beispielsweise kann dadurch die Scheibe umfangsmäßig von einem Gehäuse des Kurbeltriebs eingefasst sein.

Bei einer anderen vorteilhaften Ausführungsform kann die Schaltkulisse zwischen ihren Umfangsenden radial außen eine kreisbogenförmige Außenkontur aufweisen, von welcher die Umfangsenden radial nach außen vorstehen. Die Schalter sind am Gehäuse dann so positioniert, dass das eine Umfangsende der Schaltkulisse in der Schließstellung des Verschlusshakens den einen Schalter betätigt, während das andere Umfangsende der Schaltkulisse in der Offenstellung des Verschlusshakens den anderen Schalter betätigt. Über den Umfangsabstand der beiden Umfangsenden sowie über den Umfangsabstand der beiden Schalter lässt sich der Winkelbereich, in dem die Scheibe und somit auch die Kurbel verdreht werden muss, um den Verschlusshaken zwischen der Schließstellung und der Offenstellung zu verstellen, relativ genau einstellen.

Bei einer vorteilhaften Ausgestaltung kann das jeweilige Umfangsende über eine Rampenkontur in die kreisbogenförmige Außenkontur übergehen. Dies vereinfacht die Betätigung des jeweiligen Schalters. Zusätzlich oder alternativ kann die kreisbogenförmige Außenkontur gegenüber einer kreisförmigen Außenkontur der Scheibe koaxial und radial nach innen versetzt angeordnet sein. Durch diese Bauweise kann eine Störkontur an der Scheibe vermieden werden, die beispielsweise mit einer anderen Komponente des Kurbeltriebs kollidieren könnte, Zweckmäßig kann außerdem vorgesehen sein, dass die Umfangsenden der Schaltkulisse radial außen bündig mit der Scheibe abschließen. Auch diese Bauform reduziert die Gefahr von Störkonturen, die beispielsweise mit einem Gehäuse des Kurbeltriebs kollidieren könnten.

Gemäß einer anderen vorteilhaften Ausführungsform kann die Schaltkulisse sichelförmig ausgestaltet sein und der Kurbel bezüglich der Drehachse gegenüberliegend an der Scheibe angeordnet sein. Somit kann vorteilhaft der an der Scheibe vorhandene Bauraum zur Unterbringung der Schaltkulisse genutzt werden. Besonders zweckmäßig ist dann eine Weiterbildung, bei welcher der Antriebslenker in der Schließstellung vertikal über der Schaltkulisse angeordnet ist. Die Formgebung des Antriebslenkers bzw. die Anbindung des Antriebslenkers an der Kurbel erfolgt daher so, dass die Schaltkulisse unter den Antriebslenker eintauchen kann, ohne mit ihm zu kollidieren.

Entsprechend einer anderen vorteilhaften Ausführungsform kann der Antriebslenker um eine vertikale Schwenkachse verschwenkbar an der Kurbel gelagert sein, wobei der Antriebslenker eine von der Schwenkachse radial abstehende Nase aufweist. Das Gehäuse kann in diesem Fall zweckmäßig mit einem Anschlag ausgestattet sein, an dem die Nase in der Schließstellung des Verschlusshakens zur Anlage kommt. Die am Anschlag anliegende Nase des Antriebslenkers definiert somit die Schließstellung des Verschlusshakens. Da die Schließstellung des Verschlusshakens somit im Bereich der Kurbel definiert ist, arbeitet die im Bereich der Kurbel angeordnete Sensorik besonders genau. Ferner kann die Schaltkulisse optional an einer der Drehachse zugewandten Innenkontur mit einer Ausnehmung ausgestattet sein, in welche die Nase in der Offenstellung des Verschlusshebels eintauchen kann. Hierdurch wird ein kompakter Aufbau realisiert.

Erfindungsgemäß ist die Antriebseinrichtung über eine Kopplungseinrichtung mit dem Lagerende des Verschlusshakens antriebsverbunden, an welcher das Lagerende des Verschlusshakens um eine quer zur Längsrichtung des Verschlusshakens verlaufende, horizontale Schwenkachse verschwenkbar gelagert ist, und die am Gehäuse in der Längsrichtung des Verschlusshakens horizontal verstellbar ist. Mit anderen Worten, der Verschlusshaken ist mit seinem hinteren Lagerende zum einen an besagter Kopplungseinrichtung um eine horizontale Schwenkachse verschwenkbar gelagert und zum anderen über die am Gehäuse längsverstellbare Kopplungseinrichtung ebenfalls relativ zum Gehäuse horizontal verstellbar. Hierdurch kann eine besonders günstige Kinematik für den Verschlusshaken realisiert werden, wobei über die Kopplungseinrichtung reduzierte Reibungskräfte realisierbar sind, was die Zuverlässigkeit der Verschlusseinrichtung erhöht.

Die Kopplungseinrichtung ist als Kreuzkopf ausgestaltet, der einen Kreuzträger und eine Welle aufweist. Am Kreuzträger ist das Lagerende des Verschlusshakens um die horizontale Schwenkachse verschwenkbar gelagert. Die Welle ist um eine vertikale Schwenkachse am Kreuzträger verschwenkbar gelagert und ist mit der Antriebseinrichtung antriebsverbunden. Über diese vertikale Welle erfolgt somit die Antriebsverbindung zwischen Antriebseinrichtung und Kopplungseinrichtung, um die Kopplungseinrichtung relativ zum Gehäuse horizontal verstellen zu können. Die Bezeichnungen "Kreuzkopf" bzw. "Kreuzträger" deuten dabei an, dass die horizontale Schwenkachse, um welche der Verschlusshaken an der Kopplungseinrichtung bzw. am Kreuzträger verschwenkbar gelagert ist, und die vertikale Schwenkachse, um welche die vertikale Welle am Kreuzträger verschwenkbar gelagert ist, im Wesentlichen senkrecht zueinander verlaufen. Eine derartige Kreuz-Konfiguration zeichnet sich durch einen extrem kompakten Aufbau aus.

Entsprechend einer anderen vorteilhaften Ausführungsform kann die Kopplungseinrichtung zumindest einen Schlitten aufweisen, während das Gehäuse zumindest eine Führungsschiene besitzt, die sich horizontal in der Längsrichtung des Verschlusshakens erstreckt und in welcher der jeweilige Schlitten der Kopplungseinrichtung verstellbar ist. Hierdurch wird eine Schlittenführung realisiert, die reibungsarm und mit hoher Zuverlässigkeit arbeitet.

Besonders vorteilhaft ist nun eine Weiterbildung, bei welcher die vertikale Welle des Kreuzkopfs am oder im jeweiligen Schlitten um die jeweilige vertikale Schwenkachse verschwenkbar gelagert ist oder bei welcher die vertikale Welle bezüglich des jeweiligen Schlittens drehfest ist, wobei dann der jeweilige Schlitten um die jeweilige vertikale Schwenkachse am Gehäuse verschwenkbar gelagert ist. Als weitere Option kann vorgesehen sein, dass die vertikale Welle den jeweiligen Schlitten durchsetzt und an einer vom Kreuzträger abgewandten Seite mit der Antriebseinrichtung antriebsverbunden ist. Hierdurch ist der Kreuzträger mit dem daran gelagerten Verschlusshaken einerseits der Führungsschiene angeordnet, während die Antriebseinrichtung andererseits der Führungsschiene über die vertikale Welle mit dem Kreuzkopf gekoppelt ist. Dies erhöht die Stabilität der Schlittenführung. Darüber hinaus kann optional vorgesehen sein, die vertikale Welle mit dem jeweiligen Schlitten integral aus einem Stück herzustellen.

Bei einer anderen vorteilhaften Ausführungsform kann das Gehäuse zwei vertikal voneinander beabstandete Platten aufweisen, zwischen denen die Kopplungseinrichtung horizontal verstellbar angeordnet ist. Die Führungsschiene Ist dann in einer solchen Platte ausgebildet. Das Gehäuse besitzt dadurch einen vergleichsweise einfachen Aufbau. Besonders vorteilhaft Ist nun eine Weiterbildung, bei welcher zwei Führungsschienen vorgesehen sind, die parallel zueinander In jeweils einer der Platten ausgebildet sind. Hierdurch ergibt sich eine besonders stabile Schlittenführung, sofern die Kopplungseinrichtung mit zwei Schlitten ausgestattet ist, die jeweils mit einer dieser Führungsschienen zusammenwirken.

Bei einer anderen vorteilhaften Ausführungsform kann das Gehäuse vorne eine nach unten offene Austrittsöffnung für den Verschlusshaken aufweisen, durch welche der Verschlusshaken zumindest mit seinem Greifende aus dem Gehäuse herausragt. Durch diese Bauweise kann der Verschlusshaken mit seinem Greifende beim Übergang von seiner Offenstellung in seine Schließstellung ein entsprechendes Gegenstück, wie zum Beispiel einen Bügel, von unten ergreifen und dann nach hinten ziehen.

Schließlich betrifft die vorliegende Erfindung noch ein Fahrzeug mit einem Fahrzeugverdeck, das zwischen einer Offenstellung und einer Schließstellung verstellbar ist und das in der Schließstellung mittels wenigstens einer Verstelleinrichtung der vorbeschriebenen Art verschlossen ist. Insbesondere kann die Verschlusseinrichtung hierbei verdeckseitig angeordnet sein, so dass der Verschlusshaken mit einem fahrzeugseitigen Haken zusammenwirkt. Beispielsweise ist die Verschlusseinrichtung verdeckseitig an einer Dachkappe des Verdecks angeordnet, die in der Schließstellung des Verdecks an einem oberen Windschutzscheibenrahmen zur Anlage kommt.

Die Begriffe "horizontal" und "vertikal" beziehen sich auf eine typische Einbausituation der Verschlusseinrichtung. Die Begriffe "vorne" und "hinten" beziehen sich auf die Bewegungsrichtung des Verschlusshakens, so dass ein Ausfahren des Verschlusshakens nach vorne erfolgt, während ein Einfahren oder Zurückfahren des Verschlusshakens nach hinten erfolgt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine teilweise geschnittene Seitenansicht einer Verschlusseinrichtung in einer Schließstellung,
- Fig. 2: eine teilweise geschnittene Seitenansicht der Verschlusseinrichtung in einer Offenstellung,
- Fig. 3: eine Draufsicht der Verschlusseinrichtung in der Schließstellung,
- Fig. 4: eine Draufsicht der Verschlusseinrichtung in einer Zwischenstellung,
- Fig. 5: eine Draufsicht der Verschlusseinrichtung in der Offenstellung.

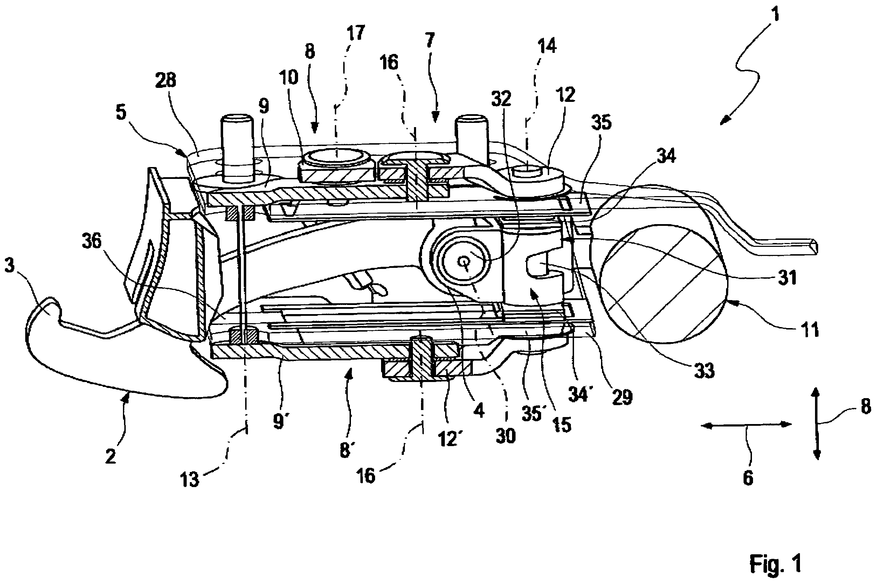

Entsprechend den Figuren 1-5 umfasst eine Verschlusseinrichtung 1, mit deren Hilfe bei einem Fahrzeug ein zwischen einer Offenstellung und einer Schließstellung verstellbares Verdeck in der Schließstellung verschließbar ist, einen Verschlusshaken 2, der vorne, also in den Fig. 1-5 links, ein Greifende 3 und hinten, also in den Fig. 1-5 rechts, ein Lagerende 4 aufweist. Ferner umfasst die Verschlusseinrichtung 1 ein Gehäuse 5, in dem das Lagerende 4 des Verschlusshakens 2 in einer Längsrichtung des Verschlusshakens 2 horizontal verstellbar gelagert ist. Eine Horizontalrichtung 6 ist dabei in den Fig. 1-5 durch einen Doppelpfeil angedeutet. Die Längsrichtung des Verschlusshakens 2 ist dabei durch eine Gerade gebildet, die durch das Greifende 3 und durch das Lagerende 4 hindurchgeführt ist. Es handelt sich also um die Richtung, in welcher sich der Verschlusshaken 2 ausgehend von seinem hinteren Lagerende 4 in Richtung seines vorderen Greifendes 3 erstreckt.

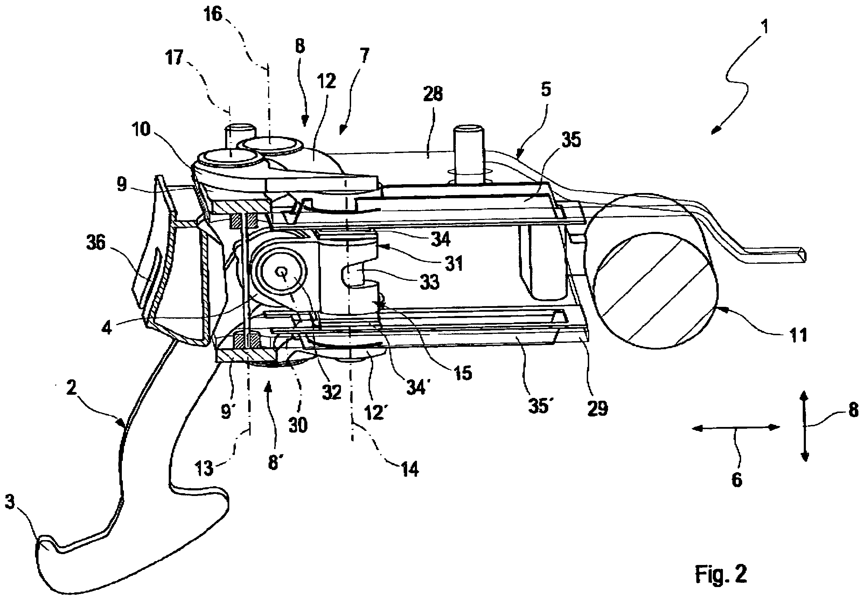

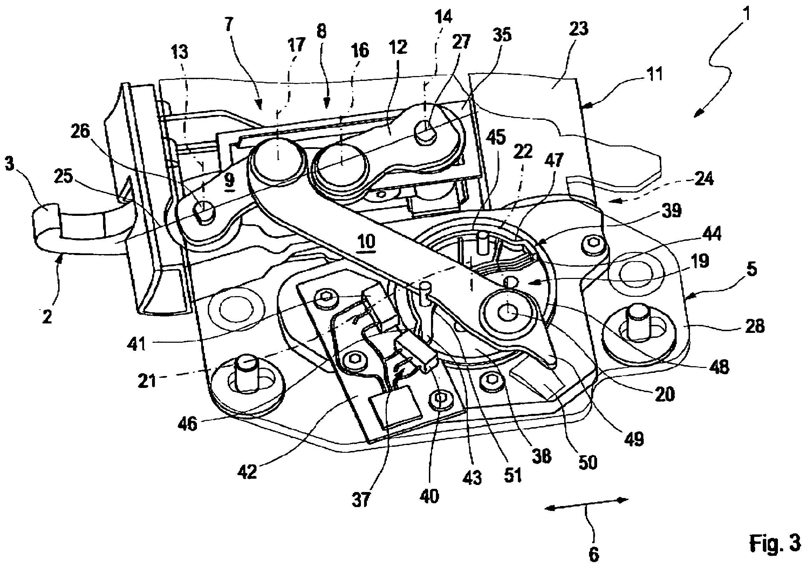

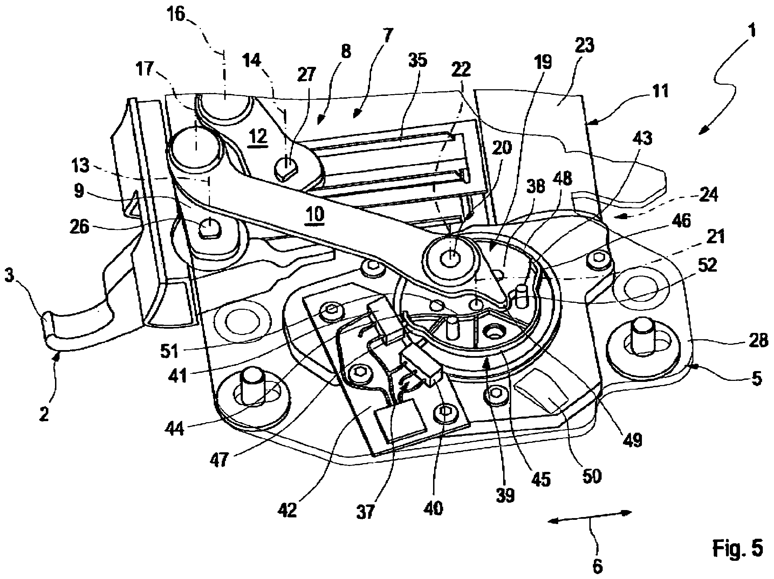

Darüber hinaus umfasst die Verschlusseinrichtung 1 eine Antriebseinrichtung 7, die zum Verstellen des Verschlusshakens 2 zwischen der in den Figuren 1 und 3 gezeigten Schließstellung und der in den Fig. 2 und 5 gezeigten Offenstellung dient.

Die Antriebseinrichtung 7 weist dabei zumindest ein Zweilenkergetriebe 8 auf. Bei der hier gezeigten, bevorzugten Ausführungsform sind zwei derartige Zweilenkergetriebe 6 und 8' vorgesehen, nämlich ein erstes Zweilenkergetriebe 8 und ein zweites Zweilenkergetriebe 8'. Ferner umfasst die Antriebseinrichtung 7 einen Antriebslenker 10, der mit einem der Zweilenkergetriebe 8, hier mit dem ersten Zweilenkergetriebe 8 antriebsverbunden ist, sowie einen Stellantrieb 11 zum Antreiben des Antriebslenkers 10.

Das jeweilige Zweilenkergetriebe 8, 8' weist dabei jeweils einen vorderen Lenker 9, 9' sowie einen hinteren Lenker 12, 12' auf. Der jeweilige vordere Lenker 9, 9' ist dabei vorne um eine vordere vertikale Schwenkachse 13 am Gehäuse 5 verschwenkbar gelagert. Der jeweilige hintere Lenker 12, 12' ist dabei hinten um eine hintere vertikale Schwenkachse 14 an einer Kopplungseinrichtung 15 verschwenkbar gelagert und außerdem über diese Kopplungseinrichtung 15 mit dem Lagerende 4 des Verschlusshakens 2 antriebsverbunden. Des Weiteren sind die beiden Lenker 9, 12 bzw. 9', 12' des jeweiligen Zweilenkergetriebes 8, 8' zwischen ihren Schwenkachsen 13, 14 um eine weitere oder mittlere vertikale Schwenkachse 16 aneinander verschwenkbar gelagert. Hierdurch bilden die beiden Lenker 9, 12 bzw. 9', 12' des jeweiligen Zweilenkergetriebes 8, 8' jeweils ein Kniegelenk, dessen Knie im Bereich dieser mittleren Schwenkachse 16 liegt. Der Antriebslenker 10 Ist nun an einem der Lenker 9, 9', 12, 12' des einen Zweilenkergetriebes 8, 8' zwischen den Schwenkachsen 13, 14, 16 des jeweiligen Lenkers 9, 9', 12, 12' um eine weitere vertikale Schwenkachse 17 verschwenkbar gelagert. Bei der hier gezeigten, bevorzugten Ausführungsform ist der Antriebslenker 10 am vorderen Lenker 9 des ersten Zweilenkergetriebes 8 schwenkbar gelagert, und zwar zwischen der vorderen Schwenkachse 13 und der mittleren Schwenkachse 16.

Eine Vertikalrichtung 18 ist dabei in den Fig. 1-5 durch einen Doppelpfeil angedeutet.

Wie sich insbesondere den Fig. 3-5 entnehmen lässt, kann der Stellantrieb 11 einen Kurbeltrieb 19 aufweisen, mit dessen Hilfe der Stellantrieb 11 den Antriebslenker 10 antreibt. Eine Kurbel 20 des Kurbeltriebs 19 ist dabei um eine Drehachse 21 drehverstellbar, die zur Kurbel 20 exzentrisch angeordnet ist. Der Antriebslenker 10 ist distal zum Zweilenkergetrieba 8, also beabstandet zum Zweilenkergetriebe 8 an der Kurbel 20 um eine vertikale Schwenkachse 22 verschwenkbar gelagert, die sich koaxial zur Kurbel 20 erstreckt. Ferner umfasst der Stellantrieb 11 einen Motor 23, zum Beispiel ein Elektromotor sowie ein damit antriebsgekoppeltes Getriebe 24, das in den Darstellungen der Fig. 1-5 verdeckt bzw. nicht erkennbar ist. Ein Abtrieb des Getriebes 24 treibt den Kurbeltrieb 19 an oder bildet selbst den Kurbeltrieb 19. Beispielsweise kann es sich beim Getriebe 24 um ein Planetengetriebe handeln, dessen Sonnenrad mit dem Motor 23 antriebsverbunden ist, entweder direkt oder zum Beispiel indirekt über ein Schneckengetriebe. Ein Planetenradträger des Planetengetriebes oder ein Hohlrad des Planetengetriebes bilden dabei den zuvor genannten Abtrieb des Getriebes 24, der den Kurbeitrieb 19 bildet oder antreibt.

In der in Fig. 3 gezeigten Schließstellung des Verschlusshakens 2 nehmen die beiden Lenker 9, 12 des in der Draufsicht erkennbaren ersten Zweilenkergetriebes 8 eine übertotpunktstellung ein. In dieser Übertotpunktstellung befindet sich die mittlere Schwenkachse 16 an einer dem Kurbeltrieb 19 zugewandten Seite einer gedachten Geraden 25, die sich senkrecht durch die vordere Schwenkachse 13 und die hintere Schwenkachse 14 erstreckt. Außerhalb der Schließstellung befindet sich die mittlere Schwenkachse 16 an einer vom Kurbeltrieb 19 abgewandten Seite dieser gedachten Geraden 25.

Die Antriebseinrichtung 7 kann grundsätzlich mit einem einzigen Zweilenkergetriebe 8 auskommen. Bevorzugt ist jedoch die hier gezeigte Ausführungsform, bei der zwei derartige Zweilenkergetriebe 8, 8' vorgesehen sind. Zweckmäßig sind die beiden Zweilenkergetriebe 8, 8' gleich aufgebaut, jedoch zueinander in der Vertikalrichtung 18 beabstandet am oder im Gehäuse 5 angeordnet. Um die beiden Zweilenkergetriebe 8, 8' miteinander antriebsmäßig zu koppeln, können die beiden vorderen Lenker 9, 9' koaxial zur vorderen Schwenkachse 13 drehfest miteinander verbunden sein. Dies kann beispielsweise mittels einer gemeinsamen vorderen Welle 26 realisiert werden, die sich koaxial zur vorderen Schwenkachse 13 erstreckt und um welche die beiden vorderen Lenker 9, 9' um die vordere Schwenkachse 13 am Gehäuse 5 verschwenkbar gelagert sind. Zusätzlich oder alternativ können die beiden hinteren Lenker 12, 12' koaxial zur hinteren Schwenkachse 14 drehfest miteinander verbunden sein. Dies lässt sich beispielsweise mit Hilfe einer gemeinsamen hinteren Welle 27 realisieren, mit der beide hinteren Lenker 12, 12' drehfest verbunden sind und die sich koaxial zur hinteren Schwenkachse 14 erstreckt. Über diese hintere Welle 27 sind dann die beiden hinteren Lenker 12, 12' um die hintere Schwenkachse 14 verschwenkbar an der Kopplungseinrichtung 15 gelagert.

Bei der hier gezeigten Ausführungsform weist das Gehäuse 5 zwei vertikal voneinander beabstandete Platten 28, 29 auf, zwischen denen das Lagerende 4 des Verschlusshakens 2 horizontal verstellbar angeordnet ist. Zweckmäßig sind die beiden Zweilenkergetriebe 8, 8' an zwei voneinander abgewandten Außenseiten der beiden Platten 28, 29 angeordnet, während das Lagerende 4 des Verschlusshakens 2 an zwei aneinander zugewandten Innenseiten der beiden Platten 28, 29 angeordnet ist.

Die Antriebseinrichtung 7 ist über die Kopplungseinrichtung 15 mit dem Lagerende 4 des Verschlusshakens 2 antriebsverbunden. An dieser Kopplungseinrichtung 15 ist das Lagerende 4 des Verschlusshakens 2 um eine horizontale Schwenkachse 30 verschwenkbar gelagert, die sich quer zur Längsrichtung des Verschlusshakens 2 erstreckt. Ferner ist die Kopplungseinrichtung 15 am Gehäuse 5 in der Längsrichtung des Verschlusshakens 2 horizontal verstellbar gelagert. Somit ist der Verschlusshakens 2 an seinem Lagerende 4 nicht direkt am Gehäuse 5, sondern indirekt über die Kopplungseinrichtung 15 gelagert, und zwar einerseits um die Schwenkachse 30 verschwenkbar und andererseits in der Horizontalrichtung 6 verstellbar.

Erfindungsgemäß ist die Kopplungseinrichtung 15 als Kreuzkopf ausgestaltet, der im Folgenden ebenfalls mit 15 bezeichnet werden kann. Besagter Kreuzkopf 15 weist einen Kreuzträger 31 auf, an dem das Lagerende 4 des Verschlusshakens 2 um die horizontale Schwenkachse 30 verschwenkbar gelagert ist. Ein entsprechendes Schwenklager ist dabei mit 32 bezeichnet. Ferner weist der Kreuzkopf 15 eine Welle 33 auf, die um die hintere vertikale Schwenkachse 14 am Kreuzträger 31 verschwenkbar gelagert ist und dementsprechend im Folgenden auch als vertikale Welle 33 bezeichnet werden kann. Mit dieser vertikalen Welle 33 ist die Kopplungseinrichtung 15 bzw. der Kreuzkopf 15 mit der Antriebseinrichtung 7 antriebsverbunden. Insbesondere kann diese vertikale Welle 33 die zuvor genannte hintere Welle 27 umfassen, die mit dem jeweiligen hinteren Lenker 12 zur Übertragung von in der Längsrichtung des Verschlusshebels 2 orientierten horizontalen Kräften geeignet ist.

Die Kopplungseinrichtung 15 kann wenigstens einen Schlitten 34 aufweisen. Im Beispiel sind zwei parallel wirkende Schlitten 34 und 34' vorgesehen. Das Gehäuse 5 weist für den jeweiligen Schlitten 34, 34' jeweils eine Führungsschiene 35 bzw. 35' auf. Die jeweilige Führungsschiene 35, 35' erstreckt sich dabei horizontal in der Längsrichtung des Verschlusshakens 2. Ferner ist in der jeweiligen Führungsschiene 35, 35' der zugehörige Schlitten 34 bzw. 34' verstellbar angeordnet. Insbesondere können dabei Schlitten 34, 34' und Führungsschiene 35, 35' eine Gleitverstellbarkeit oder Schiebeverstellbarkeit realisieren, die zweidimensional bzw. bidirektional ausgelegt ist. Ferner ist die vertikale Welle 33 im oder am jeweiligen Schlitten 34, 34' um die jeweilige hintere vertikale Schwenkachse 14 verschwenkbar gelagert. Bei einer alternativen Ausführungsform kann vorgesehen sein, dass die vertikale Welle 33 bezüglich des jeweiligen Schlittens 34, 34' drehfest angeordnet ist, wobei dann der jeweilige Schlitten 34, 34' um die jeweilige hintere vertikale Schwenkachse 14 am Gehäuse 5 verschwenkbar gelagert ist.

Die vertikale Welle 33 bzw. ein die hintere Welle 27 bildender Abschnitt der vertikalen Welle 33 durchsetzt den jeweiligen Schlitten 34, 34' und ist an der vom Kreuzträger 31 abgewandten Seite mit der Antriebseinrichtung 7 antriebsverbunden. Insbesondere ist die hintere Welle 27 integral an der vertikalen Welle 33 ausgeformt. Optional kann außerdern vorgesehen sein, dass die vertikale Welle 33 mit dem jeweiligen Schlitten 34, 34' integral aus einem Stück hergestellt ist.

Sofern wie hier das Gehäuse 5 zwei vertikal voneinander beabstandete Platten 28, 29 aufweist, ist die Kopplungseinrichtung 15 zwischen den beiden Platten 28, 29 horizontal verstellbar angeordnet. Die Führungsschienen 35, 35' sind dabei in den Platten 28, 29 ausgebildet, so dass jede Platte 28, 29 genau eine solche Führungsschiene 35, 35' aufweist. Die beiden Führungsschienen 35, 35' erstrecken sich dabei parallel zueinander und geradlinig.

Das Gehäuse 5 ist vorne mit einer nach unten offenen Austrittsöffnung 36 ausgestattet, durch welche der Verschlusshaken 2 hindurchgeführt ist, derart, dass der Verschlusshaken 2 zumindest mit seinem Greifende 3 aus dem Gehäuse 5 herausragt. Beim Verstellen des Verschlusshakens 2 von der Schließstellung in die Offenstellung wird das Lagerende 4 von der eingefahrenen hinteren Stellung, die in Fig. 1 erkennbar ist, in eine nach vom verstellte vordere Stellung überführt, die in Fig. 2 wiedergegeben ist. Hierbei wird der Verschlusshaken 2 durch die Austrittsöffnung 36 nach vorn ausgefahren. Beim Zurückverstellen von der Offenstellung in die Schließstellung wird der Verschlusshaken 2 wieder durch die Austrittsöffnung 36 nach hinten in das Gehäuse 5 eingefahren bzw. zurückgezogen.

Entsprechend den Fig. 3-5 ist die Verschlusseinrichtung 1 außerdem mit einer Sensorik 37 ausgestattet, mit deren Hilfe die Schließstellung und die Offenstellung des Verschlusshakens 2 erkennbar bzw. detektierbar sind. Diese Sensorik 37 wirkt bei der hier gezeigten Verschlusseinrichtung 1 mit dem Kurbeltrieb 19 zusammen. Hierzu sind die Komponenten der Sensorik 37 im Bereich des Kurbeltriebs 19 angeordnet.

Der Kurbeltrieb 19 umfasst eine um die Drehachse 21 drehverstellbare Scheibe 38, an der die Kurbel 20 angeordnet ist. Dabei kann - je nach Kopplung zwischen Kurbel 20 und Antriebshebel 10 - die Kurbel 20 drehfest an der Scheibe 28 angebracht sein. Ebenso kann die Kurbel 20 um ihre Drehachse 22 drehbar zur Scheibe 38 gelagert sein. Die Sensorik 37 weist eine an der Scheibe 38 drehfest angeordnete Schaltkulisse 39 auf und ist außerdem mit zwei Schaltern, nämlich mit einem ersten Schalter 40 und einem zweiten Schalter 41 ausgestattet. Die beiden Schalter 40, 41 sind in der Umfangsrichtung der Scheibe 38 voneinander beabstandet angeordnet und außerdem bezüglich des Gehäuses 5 ortsfest angeordnet. Beispielsweise sitzen beide Schalter 40, 41 auf einer Schaltungsplatine 42, die am Gehäuse 5 fest angebracht ist, zum Beispiel damit verschraubt ist. Die Schaltkulisse 39 und die Schalter 40, 41 sind so aufeinander abgestimmt, dass die Schaltkulisse 39 die beiden Schalter 40, 41 betätigt. So betätigt die Schaltkulisse 39 in der in Fig. 3 gezeigten Schließstellung des Verschlusshakens 2 den ersten Schalter 40 und in der in Fig. 5 gezelgten Offenstellung des Verschlusshakens 2 den zweiten Schalter 41.

Die Sohaltkulisse 39 ist bezüglich der Drehachse 21 axial an der Scheibe 38 angeordnet und ist bei der gezeigten Ausführungsform sichelförmig ausgestaltet, so dass sie sich in der Umfangsrichtung der Scheibe 38 erstreckt und dementsprechend zwei Umfangsenden, nämlich ein erstes Umfangsende 43 und ein zweites Umfangsende 44 aufweist. Femer ist die Schaltkulisse 39 an der Scheibe 38 bezüglich der Drehachse 21 gegenüber der Kurbel 20 angeordnet. Das heißt, die Kurbel 20 und die Schaltkulisse 39 liegen sich an der Scheibe 38 einander bezüglich der Drehachse 21 diametral gegenüber.

Die Schaltkulisse 39 weist zwischen ihren Umfangsenden 43, 44 radial außen z. B. eine kreisbogenförmige Außenkontur 45 auf, von der die Umfangsenden 43, 44 radial nach außen vorstehen. Die Umfangsenden 43, 44 dienen zum Betätigen der Schalter 40, 41. So betätigt das erste Umfangsende 43 in der Schließstellung gemäß Fig. 3 den ersten Schalter 40, während das zweite Umfangsende 44 in der Offenstellung gemäß Fig. 5 den zweiten Schalter 41 betätigt.

Die beiden Umfangsenden 43, 44 können dabei jeweils über eine Rampenkontur 46 bzw. 47 in die kreisbogenförmige Außenkontur 45 übergehen. Die Rampenkonturen 46, 47 erleichtern die Betätigung des jeweiligen Schalters 40, 41. Des Weiteren schließen die Umfangsenden 43, 44 radial außen zweckmäßig bündig mit der Scheibe 38 ab, die eine kreisförmige Außenkontur 48 aufweist. Dementsprechend ist die kreisbogenförmige Außenkontur 45 der Schaltkulisse 39 gegenüber der kreisförmigen Außenkontur 48 der Scheibe 38 koaxial und radial nach innen versetzt angeordnet.

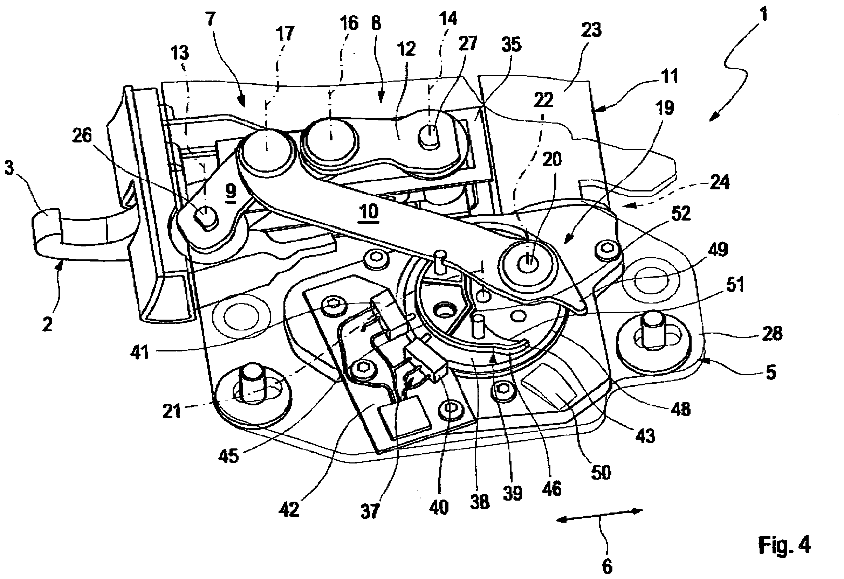

Wie den Fig. 3 und 4 entnehmbar ist, ist die Anbindung zwischen Antriebslenker 10 und Kurbel 20 so gestaltet, dass die Schaltkulisse 39 unter dem Antriebslenker 10 einfahrbar ist. Beispielsweise ist der Antriebslenker 10 hierzu abgekröpft, um einen vertikalen Abstand zwischen Antriebslenker 10 und Schaltkulisse 39 zu erzeugen.

Der Antriebslenker 10 ist um die vertikale Schwenkachse 22, die sich koaxial zur Kurbel 20 erstreckt, verschwenkbar an der Kurbel 20 gelagert. Des Weiteren besitzt der Antriebslenker 10 eine bezüglich der Schwenkachse 22 radial abstehende Nase 49. Diese Nase 49 steht dementsprechend distal zum zugehörigen Zweilenkergetriebe 8 vom Antriebslenker 10 ab. Das Gehäuse 5 besitzt nun einen Anschlag 50, an dem die Nase 49 bei Erreichen der Schließstellung gemäß Fig. 3 zur Anlage kommt. Dementsprechend definiert der Anschlag 50 die Schließstellung des Verschlusshakens 2. Zweckmäßig kann nun die Schaltkulisse 39 an einer der Drehachse 21 der Scheibe 38 zugewandten Innenkontur 51 eine Ausnehmung 52 aufweisen, die in den Fig. 4 und 5 erkennbar ist. In diese Ausnehmung 52 taucht die Nase 49 bei Erreichen der Offenstellung des Verstellhakens 2 gemäß Fig. 5 ein.

Die hier vorgestellte Verschlusseinrichtung 1 kommt zweckmäßig bei einem Fahrzeug zum Einsatz, das ein Verdeck aufweist, welches zwischen einer Offenstellung und einer Schließstellung verstellbar ist. Die Verschlusseinrichtung 1 wird dabei zum Verschließen bzw. Verriegeln des Verdecks in dessen Schließstellung verwendet. Dabei können gleichzeitig auch zwei oder mehr derartige Verschlusseinrichtungen zum Einsatz kommen. Beispielsweise kann das Verdeck an einem beim Schließvorgang vorausgehenden vorderen Ende eine Dachkappe aufweisen, an der wenigstens eine solche Verschlusseinrichtung 1 angeordnet ist. Die Dachkappe kommt in der Schließstellung des Verdecks an einem oberen Windschutzscheibenrahmen zur Anlage, Somit greift der Verschlusshaken 2 an einem Bügel oder dergleichen an, der an besagtem Windschutzscheibenrahmen vorgesehen ist. Zweckmäßig ist daher die hier vorgestellte Verschlusseinrichtung 1 verdeckseitig angeordnet. Dies wird durch die in der Horizontalrichtung 18 erzielte flache bzw. kompakte Bauform begünstigt.

## Patentansprüche

1. Verschlusseinrichtung für ein Verdeck eines Fahrzeugs,
- mit einem Verschlusshaken (2), der vorne ein Greifende (3) und hinten ein Lagerende (4) aufweist,
- mit einem Gehäuse (5), in dem das Lagerende (4) in einer Längsrichtung des Verschlusshakens (2) horizontal verstellbar gelagert ist,
- mit einer Antriebseinrichtung (7) zum Verstellen des Verschlusshakens (2),
- wobei die Antriebseinrichtung (7) zumindest ein Zweilenkergetriebe (8), einen mit dem Zweilenkergetriebe (8) antriebsverbundenen Antriebslenker (10) und einen Stellantrieb (11) zum Antreiben des Antriebslenkers (10) aufweist,
- wobei das Zweilenkergetriebe (8) einen vorderen Lenker (9) aufweist, der vorne um eine vordere vertikale Schwenkachse (13) am Gehäuse (5) verschwenkbar gelagert ist,
- wobei das Zweilenkergetriebe (8) einen hinteren Lenker (12) aufweist, der hinten über eine Kopplungseinrichtung (15) mit dem Lagerende (4) des Verschlusshakens (2) antriebsverbunden ist sowie um eine hintere vertikale Schwenkachse (14) an der Kopplungseinrichtung (15) verschwenkbar gelagert ist,
- wobei die beiden Lenker (9, 12) des Zweilenkergetriebes (8) zwischen ihren Schwenkachsen (13, 14) um eine weitere vertikale Schwenkachse (16) aneinander verschwenkbar gelagert sind,
- wobei der Antriebslenker (10) an einem der Lenker (9) um eine weitere vertikale Schwenkachse (17) verschwenkbar gelagert ist,
**dadurch gekennzeichnet,**
- **dass** der Antriebslenker (10) an einem der Lenker (9) zwischen dessen Schwenkachsen (14, 16) um eine weitere vertikale Schwenkachse 17 gelagert ist,
- **dass** die Antriebseinrichtung (7) über eine als Kreuzkopf ausgestaltete Kopplungseinrichtung (15) mit dem Lagerende des Verschlusshakens antriebsverbunden ist,
- **dass** der Kreuzkopf einen Kreuzträger aufweist, an dem das Lagerende (4) des Verschlusshakens (2) um eine quer zur Längsrichtung des Verschlusshakens (2) verlaufende, horizontale Schwenkachse (30) verschwenkbar gelagert ist und der Kreuzkopf eine Welle (33) aufweist, die um die hintere vertikale Schwenkachse (14) am Kreuzträger (31) verschwenkbar gelagert ist,
- **dass** die Kopplungseinrichtung (15) am Gehäuse (5) in der Längsrichtung des Verschlusshakens (2) horizontal verstellbar gelagert ist.

2. Verschlusseinrichtung nach Anspruch 1,
**dadurch gekennzeichnet,**
- **dass** der Stellantrieb (11) einen Kurbeltrieb (19) zum Antreiben des Antriebslenkers (10) aufweist, dessen Kurbel (20) um eine zur Kurbel (20) exzentrische, vertikale Drehachse (21) drehverstellbar ist,
- **dass** der Antriebslenker (10) distal zum Zweilenkergetriebe (8) an der Kurbel (20) um eine vertikale Schwenkachse (22) verschwenkbar gelagert ist.

3. Verschlusseinrichtung nach Anspruch 2,
**dadurch gekennzeichnet,**
- **dass** der Stellantrieb (11) einen Motor (23) und ein damit antriebsgekoppeltes Getriebe (24) aufweist,
- **dass** ein Abtrieb des Getriebes (24) den Kurbeltrieb (19) antreibt oder bildet,
- wobei insbesondere vorgesehen sein kann, dass das Getriebe (24) als Planetengetriebe ausgestaltet ist, dessen Sonnenrad mit dem Motor (23) antriebsverbunden ist und dessen Planetenradträger oder dessen Hohlrad den Abtrieb bildet, der den Kurbeltrieb (19) antreibt oder bildet.

4. Verschlusseinrichtung nach einem der Ansprüche 1 bis 3,
**dadurch gekennzeichnet,**
**dass** die Lenker (9, 12) des Zweilenkergetriebes (8) in einer Schließstellung des Verschlusshakens (2) eine Übertotpunktstellung einnehmen.

5. Verschlusseinrichtung nach einem der Ansprüche 1 bis 4,
**dadurch gekennzeichnet,**
- **dass** die Antriebseinrichtung (7) ein zweites Zweilenkergetriebe (8') aufweist, das beabstandet zum anderen oder ersten Zweilenkergetriebe (8) am oder im Gehäuse (5) angeordnet ist,
- **dass** die vorderen Lenker (9, 9') der beiden Zweilenkergetriebe (8, 8') koaxial zur vorderen Schwenkachse (13) und/oder die hinteren Lenker (12, 12') der beiden Zweilenkergetriebe (8, 8') koaxial zur hinteren Schwenkachse (14) drehfest miteinander verbunden sind.

6. Verschlusseinrichtung nach Anspruch 5,
**dadurch gekennzeichnet,**
- **dass** die vorderen Lenker (9, 9') der beiden Zweilenkergetriebe (8, 8') jeweils drehfest an einer gemeinsamen vorderen Welle (26) angeordnet sind, die um die vordere Schwenkachse (13) am Gehäuse (5) verschwenkbar gelagert ist, und/oder
- **dass** die hinteren Lenker (12, 12') der beiden Zweilenkergetriebe (8, 8') jeweils drehfest an einer gemeinsamen hinteren Welle (27) angeordnet sind, die um die hintere Schwenkachse (14) an der Kopplungseinrichtung (15) verschwenkbar gelagert sind.

7. Verschlusseinrichtung nach Anspruch 5 oder 6,
**dadurch gekennzeichnet,**
- **dass** das Gehäuse (5) zwei vertikal voneinander beabstandete Platten (28, 29) aufweist, zwischen denen das Lagerende (4) des Verschlusshakens (2) horizontal verstellbar angeordnet ist,
- **dass** die beiden Zweilenkergetriebe (8, 8') an zwei voneinander abgewandten Außenseiten der beiden Platten (28, 29) angeordnet sind.

8. Verschlusseinrichtung nach einem der Ansprüche 1 bis 7,
**dadurch gekennzeichnet,**
- **dass** eine Sensorik (37) zum Erkennen einer Schließstellung und einer Offenstellung des Verschlusshakens (2) vorgesehen ist,
- **dass** die Antriebseinrichtung (7) den Antriebslenker (10) und einen Kurbeltrieb (19) zum Antreiben des Antriebslenkers (10) aufweist,
- **dass** der Kurbeltrieb (19) eine um eine vertikale Drehachse (21) drehverstellbare und zur Drehachse (21) exzentrisch angeordnete Kurbel (20) aufweist, die mit dem Antriebslenker (10) antriebsverbunden ist,
- **dass** die Sensorik (37) mit dem Kurbeltrieb (19) zusammenwirkt.

9. Fahrzeug mit einem Fahrzeugverdeck, das zwischen einer Offenstellung und einer Schließstellung verstellbar ist und das in der Schließstellung mittels wenigstens einer Verschlusseinrichtung (1) nach einem der Ansprüche 1 bis 8 verschlossen ist.

## Claims

1. Locking device for a top of a vehicle,
- having a locking hook (2) which has a gripping end (3) at the front and a bearing end (4) at the rear,
- having a housing (5), in which the bearing end (4) is mounted so as to be adjustable horizontally in a longitudinal direction of the locking hook (2),
- having a drive device (7) for adjusting the locking hook (2),
- wherein the drive device (7) has at least one two-link mechanism (8), a drive link (10) drive-connected to the two-link mechanism (8), and an actuating drive (11) for driving the drive link (10),
- wherein the two-link mechanism (8) has a front link (9) which is mounted on the housing (5) so as to be pivotable at the front about a front vertical pivot axis (13),
- wherein the two-link mechanism (8) has a rear link (12) which is drive-connected at the rear via a coupling device (15) to the bearing end (4) of the locking hook (2), and is mounted on the coupling device (15) so as to be pivotable about a rear vertical pivot axis (14),
- wherein the two links (9, 12) of the two-link mechanism (8) are mounted on one another between their pivot axes (13, 14) so as to be pivotable about a further vertical pivot axis (16), and
- wherein the drive link (10) is mounted on one of the links (9) so as to be pivotable about a further vertical pivot axis (17),
**characterized**
- **in that** the drive link (10) is mounted on one of the links (9), between the pivot axes (14, 16) thereof, about a further vertical pivot axis (17),
- **in that** the drive device (7) is drive-connected to the bearing end of the locking hook via a coupling device (15) configured as a crosshead,
- **in that** the crosshead has a cross carrier, on which the bearing end (4) of the locking hook (2) is mounted so as to be pivotable about a horizontal pivot axis (30) extending transversely to the longitudinal direction of the locking hook (2), and the crosshead has a shaft (33) which is mounted on the cross carrier (31) so as to be pivotable about the rear vertical pivot axis (14),
- **in that** the coupling device (15) is mounted on the housing (5) so as to be adjustable horizontally in the longitudinal direction of the locking hook (2).

2. Locking device according to Claim 1,
**characterized**
- **in that** the actuating drive (11) has a crank drive (19) for driving the drive link (10), the crank (20) of which is rotationally adjustable about a vertical axis of rotation (21) that is eccentric with respect to the crank (20),
- **in that** the drive link (10) is mounted on the crank (20), distally with respect to the two-link mechanism (8), so as to be pivotable about a vertical pivot axis (22).

3. Locking device according to Claim 2,
**characterized**
- **in that** the actuating drive (11) has a motor (23) and a gear mechanism (24) drive-coupled thereto,
- **in that** an output of the gear mechanism (24) drives or forms the crank drive (19),
- wherein it is possible to provide in particular that the gear mechanism (24) is configured as a planetary gear mechanism, the sun gear of which is drive-connected to the motor (23) and the planetary gear carrier of which or the internal gear of which forms the output, which drives or forms the crank drive (19).

4. Locking device according to one of Claims 1 to 3,
**characterized**
**in that** the links (9, 12) of the two-link mechanism (8) adopt an over-dead-centre position in a closed position of the locking hook (2).

5. Locking device according to one of Claims 1 to 4,
**characterized**
- **in that** the drive device (7) has a second two-link mechanism (8'), which is arranged on or in the housing (5) in a manner spaced apart from the other or first two-link mechanism (8), and
- **in that** the front links (9, 9') of the two two-link mechanisms (8, 8') are connected together for conjoint rotation coaxially with the front pivot axis (13) and/or the rear links (12, 12') of the two two-link mechanisms (8, 8') are connected together for conjoint rotation coaxially with the rear pivot axis (14).

6. Locking device according to Claim 5,
**characterized**
- **in that** the front links (9, 9') of the two two-link mechanisms (8, 8') are each arranged for conjoint rotation on a common front shaft (26) which is mounted on the housing (5) so as to be pivotable about the front pivot axis (13), and/or
- **in that** the rear links (12, 12') of the two two-link mechanisms (8, 8') are each arranged for conjoint rotation on a common rear shaft (27) which is mounted on the coupling device (15) so as to be pivotable about the rear pivot axis (14).

7. Locking device according to Claim 5 or 6,
**characterized**
- **in that** the housing (5) has two plates (28, 29) spaced apart from one another vertically, between which the bearing end (4) of the locking hook (2) is arranged so as to be horizontally adjustable,
- **in that** the two two-link mechanisms (8, 8') are arranged on two outer sides, facing away from one another, of the two plates (28, 29).

8. Locking device according to one of Claims 1 to 7,
**characterized**
- **in that** a sensor system (37) for detecting a closed position and an open position of the locking hook (2) is provided,
- **in that** the drive device (7) has the drive link (10) and a crank drive (19) for driving the drive link (10),
- **in that** the crank drive (19) has a crank (20) that is rotationally adjustable about a vertical axis of rotation (21), is arranged eccentrically with respect to the axis of rotation (21), and is drive-connected to the drive link (10),
- **in that** the sensor system (37) interacts with the crank drive (19).

9. Vehicle having a vehicle top which is adjustable between an open position and a closed position and which is locked in the closed position by means of at least one locking device (1) according to one of Claims 1 to 8.

## Revendications

1. Dispositif de fermeture du capot d'un véhicule, comprenant
- un crochet de fermeture (2) ayant une extrémité de préhension (3) à l'avant et une extrémité d'appui (4) à l'arrière,
- un boîtier (5) dans lequel l'extrémité d'appui (4) est logée de manière déplaçable horizontalement dans la direction longitudinale du crochet de fermeture (2),
- un dispositif d'entraînement (7) destiné à déplacer le crochet de fermeture (2),
- le dispositif d'entraînement (7) comportant au moins une transmission à deux bras (8), un bras d'entraînement (10) relié en entraînement à la transmission à deux bras (8) et un actionneur (11) destiné à entraîner le bras d'entraînement (10),
- la transmission à deux bras (8) comportant un bras avant (9) qui est monté sur le boîtier (5) de manière pivotante à l'avant sur un axe de pivotement vertical avant (13),
- la transmission à deux bras (8) comportant un bras arrière (12) qui est relié en entraînement à l'arrière par le biais d'un dispositif d'accouplement (15) à l'extrémité d'appui (4) du crochet de fermeture (2) et qui est monté de manière pivotante sur un axe de pivotement vertical arrière (14) sur le dispositif d'accouplement (15),
- les deux bras (9, 12) de la transmission à deux bras (8) étant montés entre leurs axes de pivotement (13, 14) de manière pivotante l'un sur l'autre sur un autre axe de pivotement vertical (16),
- le bras d'entraînement (10) étant monté sur l'un des bras (9) de manière pivotante sur un autre axe de pivotement vertical (17),
**caractérisé en ce que**
- le bras d'entraînement (10) est monté sur l'un des bras (9) entre ses axes de pivotement (14, 16) de manière pivotante sur un autre axe de pivotement vertical 17,
- le dispositif d'entraînement (7) est relié en entraînement à l'extrémité d'appui du crochet de fermeture par le biais d'un dispositif d'accouplement (15) conçu comme une tête de crosse,
- la tête de crosse comporte un support de crosse sur lequel l'extrémité d'appui (4) du crochet de fermeture (2) est montée de manière pivotante sur un axe de pivotement horizontal (30) s'étendant transversalement à la direction longitudinale du crochet de fermeture (2) et la tête de crosse comporte un arbre (33) qui est monté sur la traverse (31) de manière pivotante sur l'axe de pivotement vertical arrière (14),
- le dispositif d'accouplement (15) est monté de manière déplaçable horizontalement sur le boîtier (5) dans la direction longitudinale du crochet de fermeture (2).

2. Dispositif de fermeture selon la revendication 1,
**caractérisé en ce que**
- l'actionneur (11) comporte un mécanisme à manivelle (19) qui est destiné à entraîner le bras d'entraînement (10) et dont la manivelle (20) peut être déplacée en rotation sur l'axe de rotation vertical (21) excentrique à la manivelle (20),
- le bras d'entraînement (10) est monté sur la manivelle (20) de manière pivotante sur un axe de pivotement vertical (22) du côté distal par rapport à la transmission à deux bras (8).

3. Dispositif de fermeture selon la revendication 2,
**caractérisé en ce que**
- l'actionneur (11) comporte un moteur (23) et une transmission (24) accouplée en entraînement à celui-ci,
- une sortie de la transmission (24) entraîne ou forme le mécanisme à manivelle (19),
- en particulier, la transmission (24) étant prévue pour être conçue comme une transmission planétaire dont la roue solaire est reliée en entraînement au moteur (23) et dont le porte-satellites ou la couronne de train planétaire forme la sortie qui entraîne ou forme le mécanisme à manivelle (19).

4. Dispositif de fermeture selon l'une des revendications 1 à 3,
**caractérisé en ce que**
les bras (9, 12) de la transmission à deux bras (8) occupent une position de point mort haut lorsque le crochet de fermeture (2) est en position fermée.

5. Dispositif de fermeture selon l'une des revendications 1 à 4,
**caractérisé en ce que**
- le dispositif d'entraînement (7) comporte une deuxième transmission à deux bras (8') qui est disposée sur ou dans le boîtier (5) à distance de l'autre ou de la première transmission à deux bras (8),
- les bras avant (9, 9') des deux transmissions à deux bras (8, 8') sont reliés l'un à l'autre solidairement en rotation coaxialement à l'axe de pivotement avant (13) et/ou les bras arrière (12, 12') des deux transmissions à deux bras (8, 8') sont reliés l'un à l'autre solidairement en rotation coaxialement à l'axe de pivotement (14).

6. Dispositif de fermeture selon la revendication 5,
**caractérisé en ce que**
- les bras avant (9, 9') des deux transmissions à deux bras (8, 8') sont disposés chacun solidairement en rotation sur un arbre avant commun (26) qui est monté sur le boîtier (5) de manière pivotante sur l'axe de pivotement avant (13) et/ou
- les bras arrière (12, 12') des deux transmissions à deux bras (8, 8') sont disposés chacun solidairement en rotation sur un arbre arrière commun (27) qui est monté sur le dispositif d'accouplement (15) de manière pivotante sur l'axe de pivotement arrière (14).

7. Dispositif de fermeture selon la revendication 5 ou 6,
**caractérisé en ce que**
- le boîtier (5) comporte deux plaques (28, 29) qui sont espacées verticalement l'une de l'autre et entre lesquelles l'extrémité d'appui (4) du crochet de fermeture (2) est disposée de manière déplaçable horizontalement,
- les deux transmissions à deux bras (8, 8') sont disposées sur deux côtés extérieurs opposés des deux plaques (28, 29).

8. Dispositif de fermeture selon l'une des revendications 1 à 7,
**caractérisé en ce que**
- un système de capteurs (37) est prévu pour détecter une position fermée et une position ouverte du crochet de fermeture (2),
- le dispositif d'entraînement (7) comporte le bras d'entraînement (10) et un entraînement à manivelle (19) pour entraîner le bras d'entraînement (10),
- l'entraînement à manivelle (19) comporte une manivelle (20) qui peut être déplacée en rotation sur un axe de rotation (21), qui est disposée excentriquement à l'axe vertical (21) et qui est reliée en entraînement au bras d'entraînement (10),
- le système de capteurs (37) coopère avec le mécanisme à manivelle (19).

9. Véhicule comprenant un capot de véhicule qui peut être déplacé entre une position ouverte et une position fermée et qui est fermé en position fermée au moyen d'au moins un dispositif de fermeture (1) selon l'une des revendications 1 à 8.
